# EUROPEAN PATENT APPLICATION

(11) **EP 2 458 233 A1**
(43) Date of publication of application: **30.05.2012**
(21) Application number: 10192813.3
(22) Date of filing: 26.11.2010
(51) Int. Cl.: F16B 25/10

(54) **Drilling screw with compound threads**

(71) Applicant: Fong Prean Industrial Co., Ltd., Kaohsiung Hsien (TW)
(72) Inventor: Lin, Teng-Hung, Taiwan (TW)
(74) Representative: Treeby, Philip David William

(57) **Abstract**

A drilling screw with compound threads comprises a head (1) at one of the screw; a drilling tip (11) at another thereof; a screwing rod (10) extending from the head (1) to the drilling tip (11); a middle section of the rod (10) being formed with a flange (12); at least one tightening thread (3) formed on the rod (10) and between the flange (12) and the head (1); at least one drilling thread (2) formed on the screwing rod (10) and extended between the flange (1) and the drilling tip (11); and at least one expanding thread (4) formed on the screwing rod (10) and extended between the flange (12) and the drilling tip (11). The thread angle of the expanding thread (4) is identical to that of the drilling thread (2). A height of the expanding thread (4) is smaller than that of the drilling thread (2) and the spiral direction of the expanding thread (4) is opposite to that of the drilling thread. The drilling operation is performed smoothly and firmly.

## Description

### FIELD OF THE INVENTION:

The present invention relates to screws, in particular to a drilling screw with at least one drilling thread, at least one expanding thread and at least one tightening thread.

### BACKGROUND OF THE INVENTION

In the prior art screw design, the key points are aimed at the drilling speed, dreg removing speed, and the retaining of the screw. The screw may have only one thread, two threads with the same screwing angle or different screwing angle.

However, the design of the screw is based on the knowledge and thought of the designers. Other than the drilling screws and expanding screw, the tightly retaining of the screw in the hole is also a main concern.

### SUMMARY OF THE INVENTION

Accordingly, the object of the present invention is to provide a drilling screw with compound threads, in that the screw has at least one tightening thread, at least one drilling thread and at least one expanding thread so that the screw can move smoothly in the drilling process and can be retained in the hole tightly.

To achieve above mentioned object, the present invention provides a A drilling screw with compound threads comprises a head at one of the screw; a drilling tip at another thereof; a screwing rod extending from the head to the drilling tip; a middle section of the screwing rod being formed with a flange; at least one tightening thread formed on the screwing rod and between the flange and the head; at least one drilling thread formed on the screwing rod and extended between the flange and the drilling tip; and at least one expanding thread formed on the screwing rod and extended between the flange and the drilling tip; the spiral direction of the expanding thread is different from that of the drilling thread.

The spiral direction of the tightening thread is different from that of the expanding thread, but the thread angle of the tightening thread is identical to that of the expanding thread. The thread angle of the expanding thread is identical to that of the drilling thread. A height of the expanding thread is smaller than that of the drilling thread and the spiral direction of the expanding thread is opposite to that of the drilling thread. Thus, the present invention forms a screw with drilling threads, expanding threads and tightening threads. Thus the drilling operation can be performed smoothly and firmly.

The various objects and advantages of the present invention will be more readily understood from the following detailed description when read in conjunction with the appended drawing.

### BRIEF DESCRIPTION OF THE DRAWINGS

Fig. 1 shows the embodiment of the present invention.
Fig. 2 is a perspective view of the present invention.
Fig. 3 shows a cross section view of the tightening thread according to the present invention, in that the upper and lower surface of the tightening thread is illustrated.
Fig. 4 shows a cross section view of the expanding thread according to the present invention, in that the upper and lower surface of the tightening thread is illustrated.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

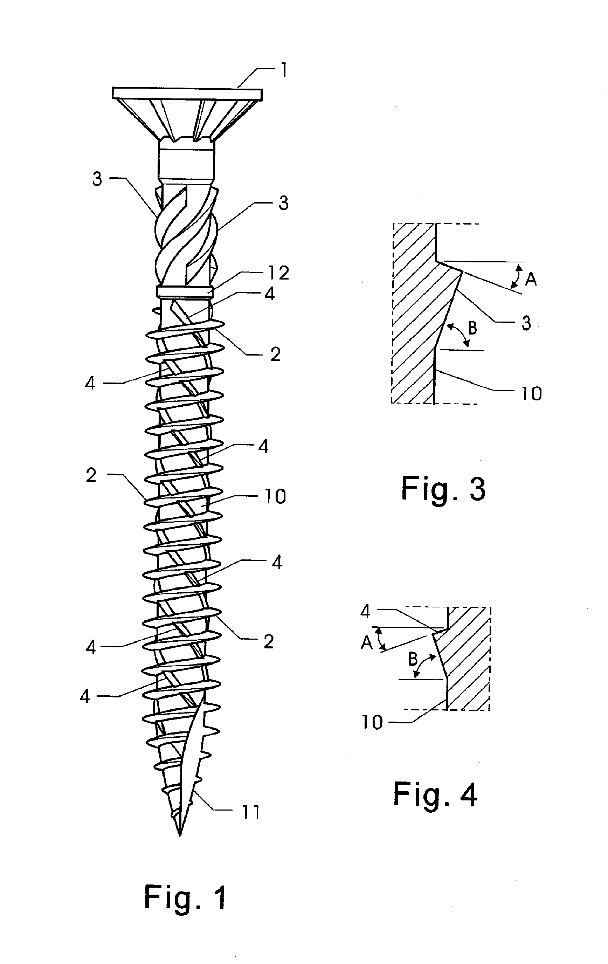

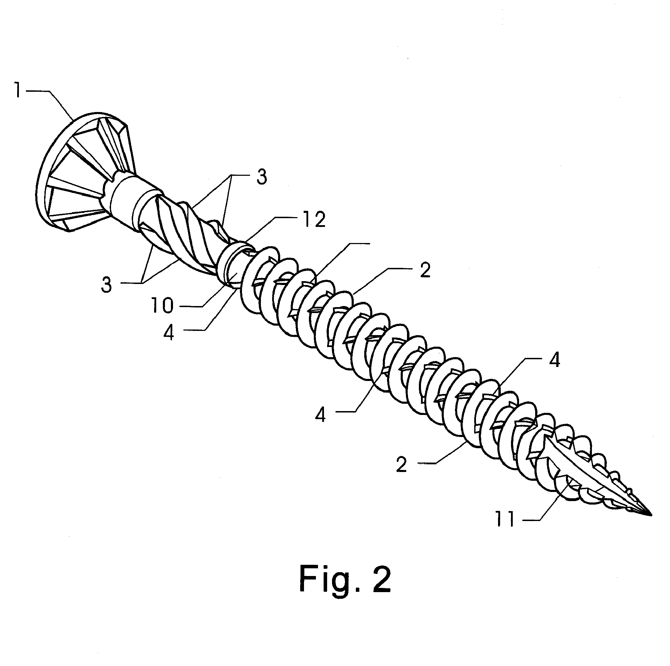

Referring to Fig. 1 and 2, the drilling screw with compound threads according to the present invention is illustrated. The screw has the following elements.

A head 1 is at one of the screw.

A drilling tip 11 is at another end of the screw.

A screwing rod 10 extends from the head to the drilling tip 11. A middle section of the screwing rod 10 is formed with a flange 12.

At least one tightening thread 3 is formed on the screwing rod 10 and is at a section between the flange 12 and the head 1. In the drawing, it is illustrated that four tightening threads 3 are shown, however, this is not used to confine the scope of the present invention. Other number of the tightening threads is permissible.

At least one drilling thread 2 is formed on the screwing rod 10 and is extended between the flange 12 and the drilling tip 11. The spiral direction of the drilling thread 2 is not confined to that illustrated in the drawing.

At least one expanding thread 4 is formed on the screwing rod 10 and is extended between the flange 12 and the drilling tip 11. In the drawing, it is illustrated that three expanding threads 4 are shown, however, this is not used to confine the scope of the present invention. Other number is permissible. The spiral direction of the expanding thread 4 is different from that of the drilling thread 2. It is illustrated in Fig. 1, that the drilling thread 2 screws counterclockwise (viewing from the upper side of Fig. 2), while the expanding thread 4 screws clockwise. Furthermore, the height of the expanding thread is higher than that of the drilling thread 2 and also higher than that of the tightening thread 3.

The spiral direction of the tightening thread 3 is different from that of the drilling thread 2. Also, the spiral direction of the expanding thread 4 is different from that of the drilling thread 2.

Each of the drilling thread, expanding thread and the tightening thread has an upper surface and a lower surface. An angle between the upper surface and the lower surface is defined as a thread angle. In the present invention, all of the thread angles of the tightening thread and the expanding threads are 90 degrees as illustrated in Figs. 3 and 4. An angle between a normal line of the screwing rod 10 and the upper surface (angle A in Figs. 3 and 4) of the thread is 20 degrees and an angle between a normal line of the screwing rod 10 and the lower surface (angle B in Figs. 3 and 4) of the thread is 70 degrees. The thread angle of the drilling thread 2 is different from that of the tightening thread 3. In drilling the screw into an object, the drilling thread 2 moves forwards, while the expanding thread 4 with an opposite spiral direction will expand the hole drilled by the screw so that the screw can move smoothly.

When the expanding thread 3 moves into the object to be drilled, the tightening thread 3 and the flange 12 will stop the dregs so as to retain the dregs in the drilling hole. The screwing operation of the tightening thread will compress the dregs. The differences of the screwing angle and thread angles of the tightening thread 3 and the drilling thread 2 will cause the screw being tightly retained in the screwing hole without releasing.

Thus, the drilling screw with compound threads of the present invention have the expanding threads, drilling threads and the tightening threads so that the screw can be tightly engaged in the screwing hole without releasing.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A drilling screw with compound threads, comprising;
a head 1 at one of the screw;
a drilling tip 11 at another end of the screw;
a screwing rod 10 extending from the head 1 to the drilling tip 11; a middle section of the screwing rod 10 being formed with a flange 12;
at least one tightening thread 3 formed on the screwing rod 10 and at a section between the flange 12 and the head 1;
at least one drilling thread 2 formed on the screwing rod 10 and extended between the flange 12 and the drilling tip 11; and
at least one expanding thread 4 formed on the screwing rod 10 and extended between the flange 12 and the drilling tip 11; the spiral direction of the expanding thread 4 is different from that of the drilling thread 2.

2. The drilling screw as claimed in claim 1, wherein there are four tightening threads 3, the tightening threads 3 and the drilling thread 2 are spiraled rightwards; the thread angle of the tightening thread 3 is different from that of the drilling thread 2; and the spiral direction of the tightening thread 3 is different from that of the drilling thread 2.

3. The drilling screw as claimed in claim 1, wherein there are four expanding threads 4 which spirals leftwards; the spiral angles and the thread angles of the expanding threads 4 and the drilling threads 2 are different from one another; a height of the expanding thread 4 is smaller than that of the tightening thread 3 and that of the drilling thread 2.

4. The drilling screw as claimed in claim 1, wherein each of the drilling thread 2, expanding thread 4 and the tightening thread 3 has an upper surface and a lower surface; an angle between the upper surface and the lower surface is defined as a thread angle; all of the thread angles of the tightening thread 3 and the expanding thread 4 are 90 degrees; an angle between a normal line of the screwing rod 10 and the upper surface is 20 degrees and an angle between a normal line of the screwing rod 10 and the lower surface is 70 degrees.
